# EUROPEAN PATENT SPECIFICATION

(11) **EP 0 614 614 B1**
(45) Date of publication and mention of the grant of the patent: **30.07.1997**
(21) Application number: 94102691.6
(22) Date of filing: 23.02.1994
(51) Int. Cl.: A23G 3/20

(54) **A method and device for forming joining lines of adhesive material, particularly in food products**
Verfahren und Vorrichtung zur Anlegung von Verbindungslinien von Klebstoff, insbesondere in der Lebensmittelherstellung
Procédé et appareil pour former des lignes de jonction d'une matière adhésive, notamment pour produits alimentaires

(30) Priority: 12.03.1993 CH 752/93
(43) Date of publication of application: 14.09.1994
(73) Proprietor: SOREMARTEC S.A., 6700 Arlon-Schoppach (BE); Ferrero S.p.A., I-12051 Alba (Cuneo) (IT); FERRERO OFFENE HANDELSGESELLSCHAFT m.b.H., D-60599 Frankfurt (DE)
(72) Inventor: Bertalero, Roberto, I-15011 Acqui Terme (Alessandria) (IT)
(74) Representative: Bosotti, Luciano

(56) References cited:
- EP-A- 0 086 319
- BE-A- 370 850
- FR-A- 512 580
- FR-A- 692 243
- US-A- 1 382 601

## Description

The present invention relates to a method of forming joining lines of adhesive material in certain regions of products. The invention has been developed with particular attention to its possible use in processes for the manufacture of food products such as, for example, confectionery products.

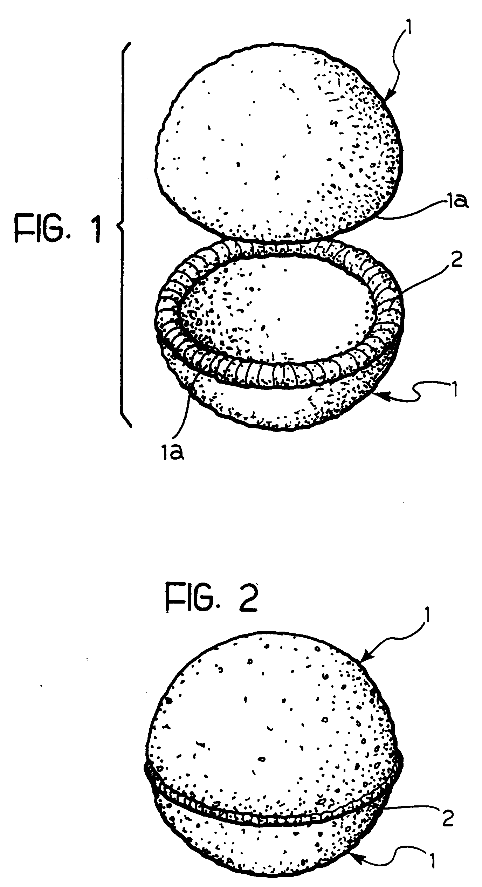

The problem upon which the invention is based can easily be understood by reference to Figures 1 and 2 of the appended drawings.

These drawings show a food product, typically a confectionery product, constituted by two hemispherical half-shells or leaves 1 constituted by pieces of wafer the mutually facing opening portions 1a of which are to be joined together. This gives rise to a finished product constituted by a spherical wafer shell enclosing within it a mass of pasty or creamy filling, possibly of a praline, of nut kernels, or the like.

For a general description of products of this type, reference may usefully be made, for example, to European patents EP-B-0 064 155, EP-B-0 083 324, and EP-B-0 086 319. A substantially similar product is disclosed, e.g., in US-A-1382 601.

In particular, the use of an annular line of alimentary material of an adhesive nature, for example, melted chocolate or a cream or paste with similar characteristics for joining the opening portions 1a of the leaves or half-shells 1 together has already been proposed. Also, it is generally known that products such as hollow confectionery products can be closed at their mouth portions by means of a closure or covering lid or layer: see, e.g., FR-A-512 530 or BE-A- 370 850. This latter document shows that layer as being formed starting from pasty chocolate coated onto a metal plate.

Naturally, the reference to two hemispherical wafer leaves or half-shells joined together by a circular annular line of adhesive alimentary material 2 is purely an example; in fact, the solution according to the invention is also suitable for use for different products (e.g. chocolate shells) and not only for forming flat, circular joining lines but for forming joining lines of any profile in general (flat or not) which can join together bodies with various profiles, for example, polygonal or mixtilinear profiles (by way of example, a product constituted by two pieces of wafer representing the two portions of a shell, etc. may be considered), etc.

Moreover, the term "joining line" as used in the present description and in the following claims, should in no way be considered as being limited to a continuous line; it thus also extends to discontinuous lines, for example, broken lines. To mention an actual example, reference may be made to European patent EP-B-0 086 319 already cited above, which discloses the features of the preambles of claims 1 and 14 and in which two hemispherical pieces of wafer are interconnected by drops of melted chocolate defining a discontinuous joining line in the equatorial plane of the product.

Whichever specific solution is adopted in forming a joining line such as the joining line indicated 2 in Figures 1 and 2 of the appended drawings, some basic requirements must be satisfied.

In the first place, it is desirable for the joining line 2 of adhesive material to affect only the end faces 1 of the two half-shells to be connected, which are joined together in abutment with one another in the finished product. During the preparation of the half-shells 1 for joining together in abutment, the aim is that the opening portions 1a be constituted by annular flat surfaces generally disposed in planes perpendicular to the polar axes of the caps forming the half-shells. This result can be achieved, for example, by the use of the solutions described in patents EP-B-0 054 229 and EP-B-0 221 033. It is thus desirable for the adhesive line 2 to be deposited only on the end faces of the two half-shells 1 without overflowing onto either the internal or the external surfaces of the half-shells.

Moreover, when a product of the type illustrated in Figures 1 and 2 is produced on a commercial scale, it is necessary to ensure extremely fast rates of operation such as to enable several hundreds of thousands, if not millions of products to be produced each day.

This requirement makes it difficult to put into practice on a commercial scale any solution which provides for the automatic reproduction of the step normally usable to form the joining line 2 by hand, that is, the deposition of the material forming the line 2 by means of a confectionery syringe or a similar tool.

The object of the present invention is therefore to provide a solution which satisfies both the requirements expressed above, thus producing a good-quality final product on a commercial scale at very fast rates of operation.

According to the present invention, this object is achieved by virtue of a method having the characteristics recited in Claim 1. Advantageous developments of the method form the subject of Claims 2 to 13. A further subject of the invention is a device which can be used to carry out the method according to the invention. This device forms the subject of Claim 14. Advantageous developments of the device form the subjects of Claims 15 to 29.

The invention will now be described, purely by way of non-limiting example, with reference to the appended drawings, in which:
Figures 1 and 2 have already been described above in order to set out the background to the technical problem upon which the invention is based,
Figure 3 shows schematically the structure of a first device operating according to the invention,
Figures 4 to 8 show successive steps of the operating sequence of the device of Figure 3,
Figures 9 and 10 show details of the device of Figure 3,
Figure 11 shows the structure of another device which can be used to carry out the invention, and
Figures 12 and 13 show schematically two steps of the operating sequence of the device according to Claim 11.

In the drawing, a device which can be used to form an annular joining line 2 (continuous or discontinuous) of adhesive material such as, for example, chocolate, in a food product such as that shown in Figures 1 and 2 is generally indicated 10.

For clarity, it is pointed out once more that the reference to a product constituted by two hemispherical leaves or half-shells joined together by an annular, flat and continuous joining line is intended purely by way of example. As will become clearer from the following description, the solution according to the invention can also be used, for example, to form discontinuous joins along lines other than flat circular lines.

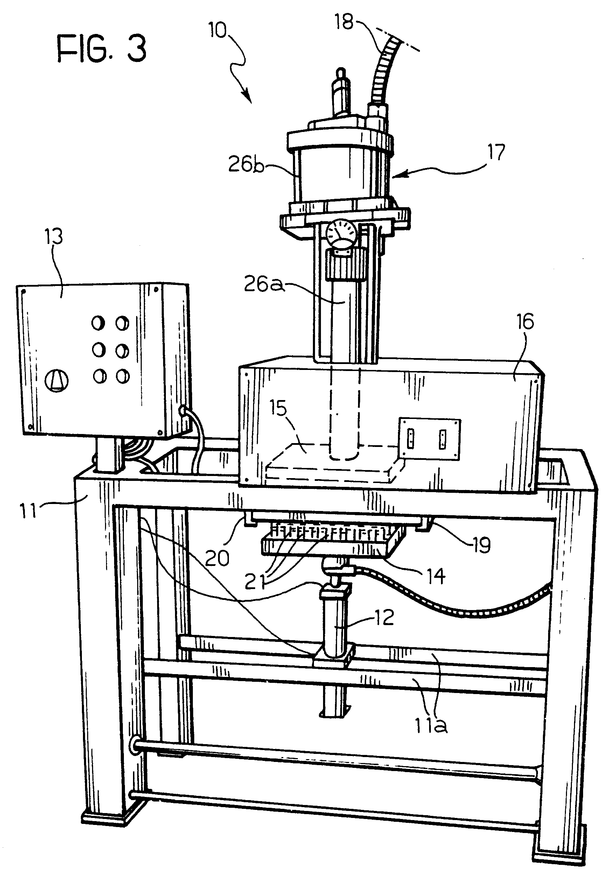

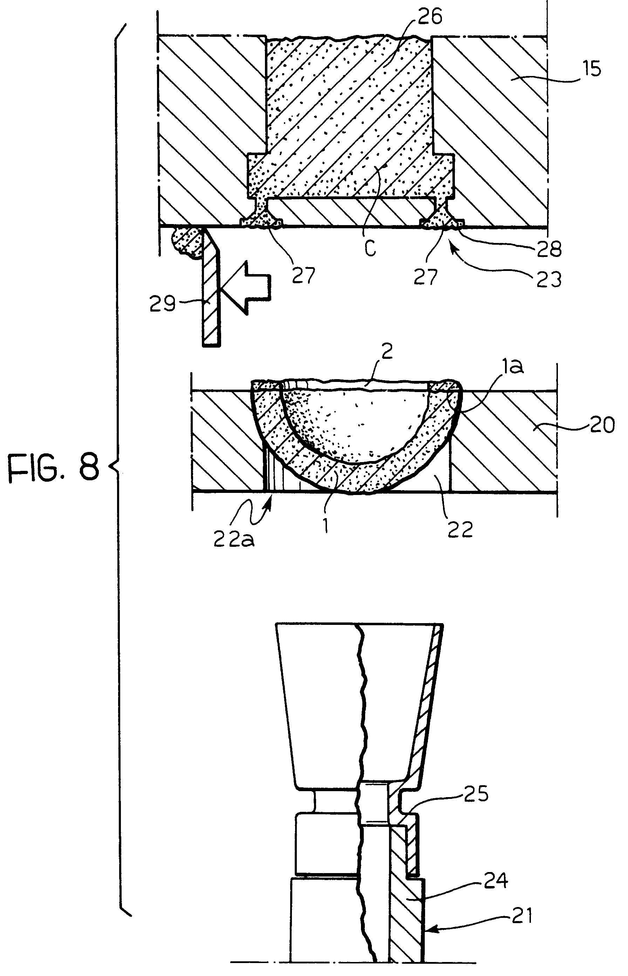

The device 10 shown in Figure 3 is composed essentially of a base or bed 11 on which a tray-like body 14 is movable vertically under the action of a fluid jack 12 operated by an automatic control system 13 (which may be considered generally known). More precisely, the tray 14 is mounted in a horizontal position on the top of the rod of the jack 12 which is mounted vertically on cross-members 11a of the bed 11. The tray 14 can thus move up and down vertically relative to a supply plate 15 (shown in greater detail in Figure 8), as a result of the extension and contraction of the jack 12. The plate 15 is mounted in a thermostatically-controlled housing 16 which is open at the bottom and is subject to the action of a supply/metering unit 17 which supplies the plate 15 with the product (for example, chocolate) to be used to form the joining line 2. The product is supplied to the device 10 by a pipe 18 connected to a line of generally known type; for example, this may be a heated pipe which enables chocolate kept at a tempering temperature (of the order of 30-35°) to be made to flow towards the supply-metering unit 17 for supply to the plate 15.

Finally, a structure, indicated 19, enables a die 20 of generally known type (see, for example, European patent EP-B-0 083 324) to be inserted in the device 10 in a position between the tray 14 and the supply plate 15.

Gripping and thrust elements 21 are mounted on the upper face of the tray 14 and, after the die 20 has been located, each is aligned vertically with a respective wafer half-shell 1 housed in a corresponding hemispherical cell 22 of the die 20. Each cell 22 has a lower hole 22a which enables the respective element 21 to penetrate (in the manner described further below). Moreover, each cell 22 is aligned vertically with a respective unit 23 for the supply of chocolate (or of the adhesive material in general) provided on the plate 15.

As will become clearer from the following - this enables the gripping elements 21 to penetrate through the cells 22, picking up the wafer pieces 1 to take them to meet the chocolate rings formed by the supply units 23 in the lower portion of the plate 15.

Briefly, both the tray 14 and the die 20, as well as the supply plate 15, have generally matrix-like structures, in the sense that each carries a respective array of identical elements arranged in homologous superposed sections.

For example, assuming that a device 10 is to be produced for simultaneously processing m x n half-shells 1, there will be m rows and n columns of active elements on the tray 14, on the plate 15, and on the die 20, constituted respectively:
- for the tray 14, by gripping and thrust elements such as that indicated 21,
- for the die 20, by upwardly-facing, open bottomed hemispherical cells of the type indicated 22, and
- for the plate 15, supply units (metering rings) such as the supply unit indicated 23.

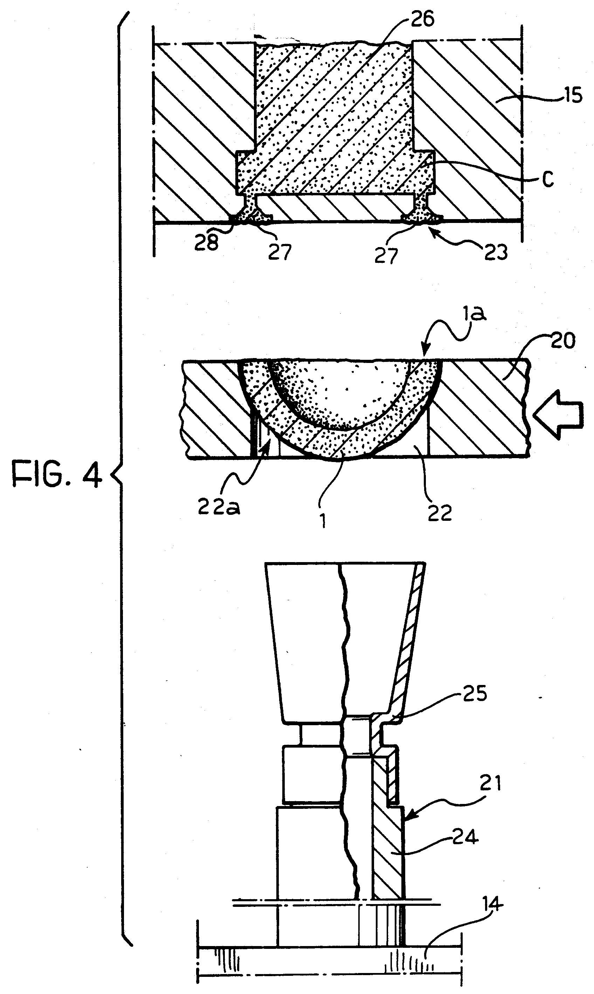

As can best be seen in the details of Figures 4 to 8, each element 21 is constituted essentially by a tubular body 24 which will be assumed to be generally cylindrical, mounted on the tray 14 with its axis oriented vertically, and connected to a vacuum (subatmospheric pressure) source (not shown).

A collar or funnel 25 of a resiliently yielding material such as, for example, rubber or soft plastics material which can come into contact with food products is fitted substantially sealingly onto the upper unit of each tubular body 24 (which is usually constituted by a rigid body, for example, by a metal tube).

As will become clearer from the following, each collar 25 constitutes a kind of suction cup which, as a result of the general upward movement of the tray 14, is intended to engage the polar region of a respective wafer half-shell 1 housed in the die 20 so as to thrust the half-shell 1 and, more precisely, its opening portion 1a, into contact with the mass of adhesive material (for example, melted chocolate) supplied by the corresponding unit 23 in the plate 15 and to immerse it, and hence dip it, therein.

The fact that the collars 25 are of soft material on the one hand enables a sufficiently delicate pressure to be exerted on the half-shells 1 (which are usually made of a fragile material such as wafer) not to give rise to breakage or crushing and, on the other hand permits a certain relative orientation of the half-shells 1 and the elements 21 as a whole, for reasons which will become clearer from the following description; in fact it is desirable for the opening portions 1a of the half-shells 1 to be able to cooperate with the plate 15 in positions in which they are oriented perfectly horizontally. This condition is not usually absolutely ensured when the half-shells 1 are loaded (with the use of known methods) into the cells 22 of the die 20 before introduction into the device 10.

As stated, the structure of the dies 20 corresponds largely to known solutions (for example, reference has been made above to European patent EP-B-0 083 324). In any case, it is important to arrange for the lower holes 22a of the cells 22 generally to have diametral dimensions such as to permit the penetration of the elements 21, and particularly of their collar portions 25, as a result of the upward movement of the tray 14 towards the die 20.

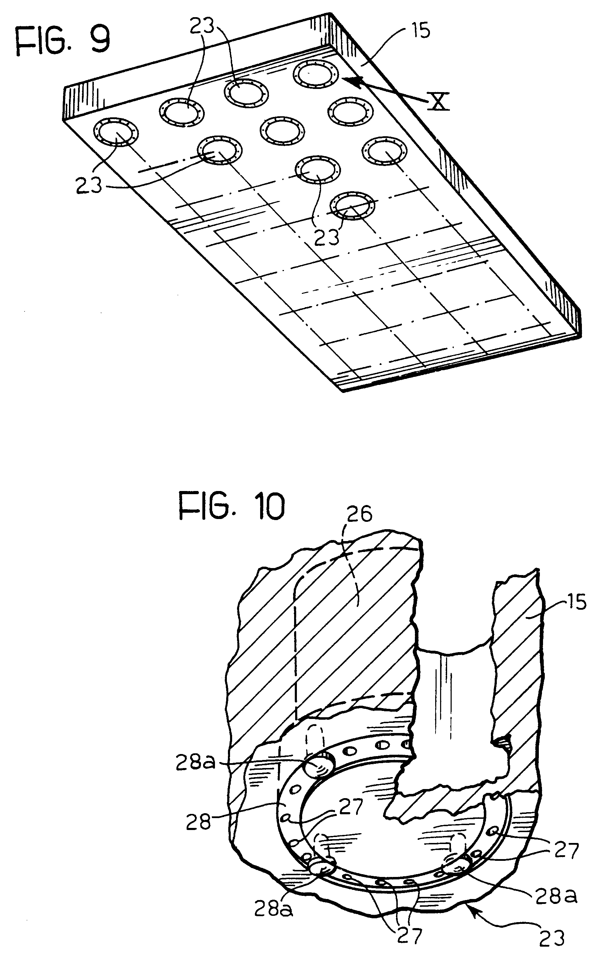

At the same time, the upwardly-facing opening portions of the cells 22 have diametral dimensions such that they can achieve a firm but delicate housing, orienting and guiding effect with respect to the portions of the wafers 1 disposed near the opening portions 1a. As already stated in the introduction to the present description, it will be assumed that each opening portion 1a is defined by a surface lying in a plane perpendicular to the polar axis of the cap defining the half-shell 1 and hence in a plane which, when the half-shell 1 is correctly oriented, is aligned and coplanar with the upper, flat face of the die 20. The characteristics of each supply unit 23 formed in the plate 15 can be deduced from a comparative examination of Figures 4 to 8, on the one hand, and Figures 9 and 10, on the other hand.

In practice, each unit for supplying the product to form the joining line 2 (for brevity, reference will be made below exclusively to the possible use of melted chocolate) is constituted by a cylindrical space 26 which opens above the plate 15 so as to house the chocolate supplied through a manifold 26a (see Figure 3) which is connected to a unit 26b (of generally known type) for the pumping and thermostatic control of the chocolate, supplied by the line 18.

Extending from the cylindrical space 26, on the periphery of the lower portion of the space 26 which forms a slightly enlarged base ring, there are chocolate-supply holes or nozzles, indicated 27 (Figure 4) opening in the lower face of the plate 15 which is intended to face the die 20.

As can best be seen in the detail of Figure 10, the holes 27 are arranged along a line corresponding to the expected trajectory of the joining line 2. In this case, in which the joining line 2 is to be circular, the holes 27 are arranged in a circle. This selection - it is repeated once more - is not, however, intended in any way as limiting.

Still with reference to the view from below of Figure 10, it can be noted that the holes 27 do not appear precisely in the lower plane of the plate 15. They preferably open in a groove 28 (which, in the embodiment illustrated, is annular with a V-shaped cross-section, and in which the holes 27 are arranged in a circle). The groove 28 has the function of enabling the chocolate (or the adhesive product in general) supplied through the holes 27 to collect on the front lower face of the plate 15 giving rise to chocolate piping which projects at least slightly downwardly to form the line 2.

Still with reference to Figure 10, it can also be seen that the holes 27 form an almost continuous ring in the groove 28, with the sole exception of some angular positions which, instead of being occupied by holes, are occupied by projecting formations 28a which, as will become clearer from the following, are intended to constitute formations for supporting and stopping the half-shells 1 which are brought into contact with the plate 15.

The term "projecting" referring to the formations 28a, which may be constituted - in a particularly simple embodiment - by small nails or screws inserted in holes in the base of the groove 28, is intended in the sense that the formations project generally relative to the base region of the groove 28.

The operation of the device 10 of Figure 3 takes place in the form of a sequence of cyclic repetitions of the steps illustrated in Figures 4 to 8.

In the first step (Figure 4), it is assumed that the die 20, which acts as a support member for an array (m rows and n columns) of half-shells 1 which are inserted, by known means, in the holes 22 with their concavities facing upwards, is located in the device 10 in a position between the tray 14, which is kept in the lowered position, and the plate 15 which is usually mounted in a fixed position relative to the framework of the device 10.

The supply/metering unit 16 then supplies a measured quantity of chocolate to the spaces 26 by means of two actions carried out simultaneously or in close succession under the control of the device 13 (which is constituted, for example, by a programmable controller). The quantity is regulated (usually experimentally with successive storage by the device 13), so as to give rise to a certain projection of the chocolate C (or other adhesive food product) through the holes 27. This is in sufficient quantity to form, on each supply unit 23, beneath the plate 15, a ring- or toroid-like piping of melted chocolate, of which the upper portion is housed in the groove 28, whilst the lower portion projects below the lower face of the plate 15 forming an approximately hemispherical meniscus.

At the same time, or after a few moments, the jack 12 is activated to move the tray 14 upwards. The elements 21 mounted on the tray thus advance upwards and each of the collars 25 penetrates the corresponding cell 22 in the die 20 from below (through the hole 22a) and picks up a respective wafer half-shell 1. As stated, the gripping action effected in the collars 25 is firm and, at the same time, delicate. The firmness of the gripping action is ensured by the activation of the vacuum sources connected to the elements 24.

The sub-atmospheric pressure which is established in the elements 24 causes the collars 25 to grip the wafer half-shells 1 delicately like suction cups, preventing them from being accidentally separated and dropped during the subsequent processing steps. At the same time, the coupling between the collars 25 and the half-shells 1 is such that it still allows a certain relative orientation.

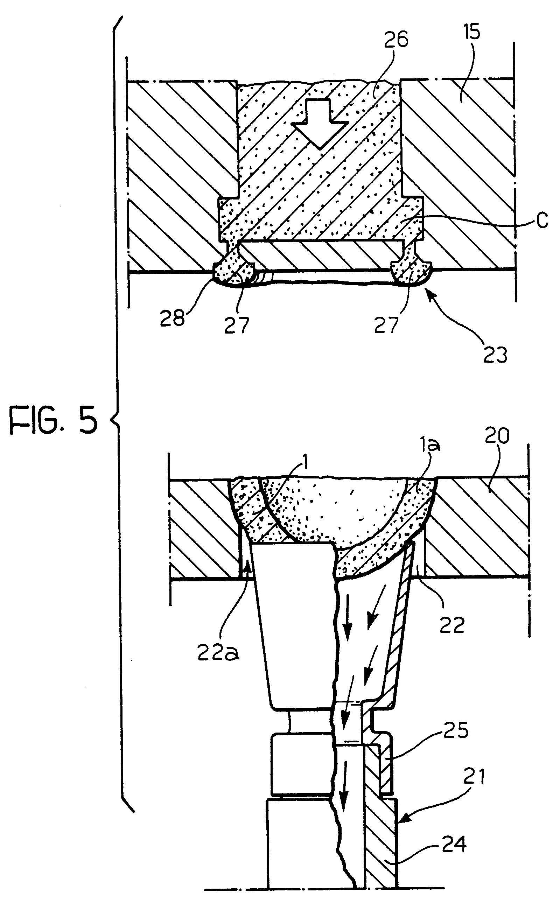

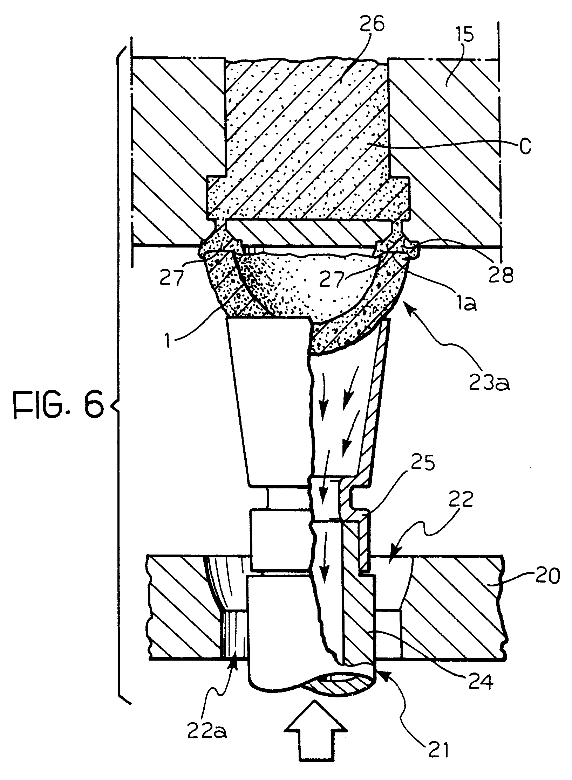

When the conditions shown schematically in Figure 5 have thus been reached, the upward travel of the tray 14 continues so that the elements 21 remove the half-shells 1 from the cells 22 of the die 20, lifting them further towards the plate 15 until the opening portions 1a are wetted (more precisely, dipped) in the melted chocolate ring or toroid supplied from the holes 27. This is in order to achieve the operative condition shown in Figure 6.

From an observation of this drawing, it will be noted that the upward travel of the half-shells 1 towards the plate 15 is not complete, in the sense that the end surface 1a of each half-shell is not fully immersed in the respective groove 28. On the contrary, the opening portions 1a are kept safely and precisely spaced from the walls of the groove 28 by virtue of the stop formations 28a. This ensures that the opening portions 1a of the half-shells 1 are dipped in the melted chocolate C without, however, being extensively immersed therein; this prevents the mass of chocolate from being able to wet the internal and external surfaces of the piece of wafer constituting the half-shell 1, giving rise to an undesired appearance.

A good portion of the melted chocolate C constituting the ring or toroid supplied through the holes 27 adheres to the mouth portion 1a of the corresponding half-shell by an overall absorption and/or adhesion phenomenon facilitated intrinsically by the fact that the opening portion 1a of the piece of wafer usually has a spongy structure with numerous pores or opercula which facilitate the taking up of the melted chocolate by the wafer.

At this point, the jack 12 can be operated in the direction which leads to the lowering of the tray 14. The elements 21 thus descend through the holes 22 of the die 20 entraining downwardly with them the half-shells 1 which are held on the collars 25 by the subatmospheric pressure generated and maintained within them.

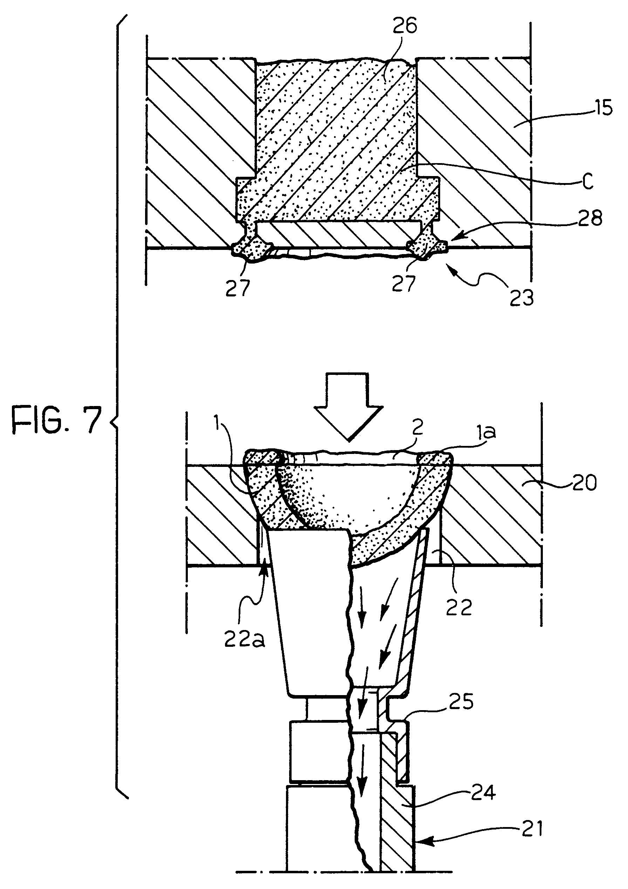

As they descend, the half-shells 1 carry with them a good portion of the chocolate which previously formed the ring or toroid on the lower face of the plate 15. The lines 2 of melted chocolate are thus formed on the opening portions 1a of the descending half-shells 1 (Figure 7).

As they continue their downward travel, the elements 21 finally release the half-shells 1, as a result of the lowering of the tray 14 by the jack 12, and as a result of the de-activation of the sources which generate the vacuum which holds the half-shells 1 on the collars 25. The elements 21 are deposited in the die 20 again with respective joining lines 2 on their opening portions 1a (Figure 8). In these conditions, and according to known criteria (see, again by way of example, the solution described in European patent EP-B-0 083 324), after being partially or wholly filled with a mass of filling, the half-shells 1 can be transferred towards a joining station (not shown) in which they and other half-shells 1 (with or without respective joining lines 2 on their opening portions) give rise to food products such as that illustrated in Figure 2 of the appended drawings.

Finally, a motor-driven wiper blade 29 (Figure 8) movable along the lower face of the plate 15 under the action of respective drive means (not shown explicitly in Figure 3) cleans the lower face of the plate 15 so as to re-establish the starting conditions shown in Figure 4.

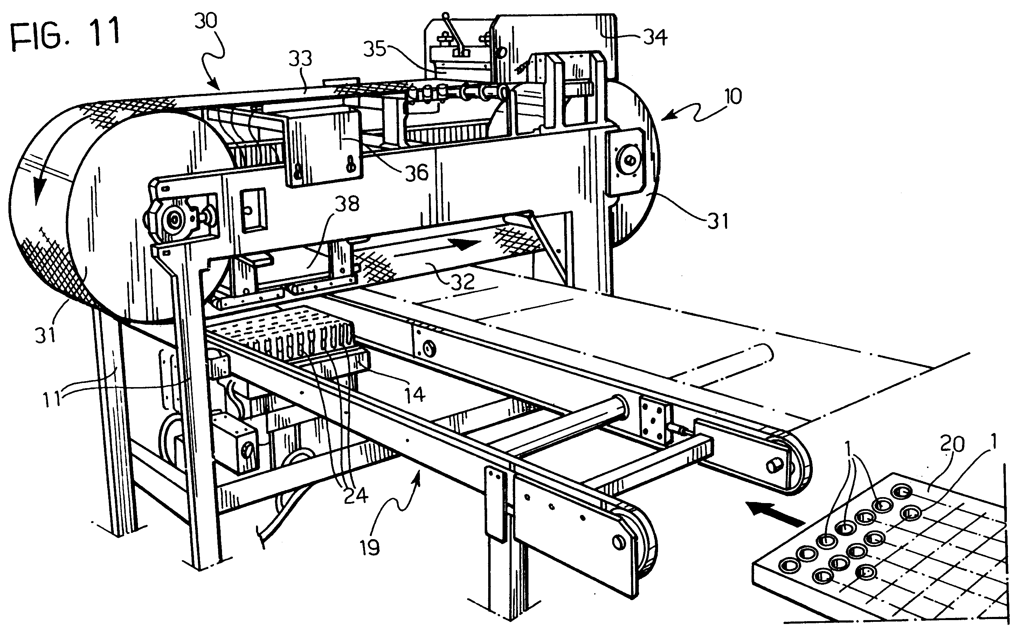

Figure 11 shows how the structure 19 which supplies the dies 20 containing half-shells 1 towards the device 10 may advantageously be configured as a conveyor such as, for example, an endless belt or chain conveyor. This conveyor advances the dies 20 horizontally above the tray 14, keeping each die stationary in the desired position throughout the time necessary to carry out the sequence of steps of Figures 4 to 8, in order then to remove the dies 20 containing the half-shells 1 which have already been provided with joining lines 2. This is all in accordance with a general reciprocating supply movement or, preferably, with a generally continuous movement such that the flow of dies 20 passes through the device 10 horizontally.

Figure 11 relates specifically to a variant of the invention, in which the plate 15 on the lower face of which rings or toroids of melted chocolate (or other adhesive alimentary material) are formed in order to be picked up by the shells 1 which are dipped therein is replaced by an annular structure on which an almost continuous layer of the adhesive material is formed.

In the variant of Figure 11, the plate 15 with the units 23 and the elements connected thereto (the metering/pouring unit 17, etc.) is replaced by a supplying/metering unit constituted essentially by a belt 30 (for example, of plastics material suitable for coming into contact with food products) which is wrapped in a loop around two rollers 31 with horizontal axes, so as to have a lower pass 32 and an upper pass 33. The pass 32 extends horizontally above the conveyor 19 on which the dies 20 containing the half-shells 1 advance.

In the embodiment illustrated, the belt 32 extends transverse the conveyor 19. Although this solution is preferred, it should not be considered essential. The belt 30 is driven by motor-driven members (not shown explicitly; typically, a motor acts on one of the rollers 31) which impart a generally rotary movement to the belt (anti-clockwise with reference to the viewpoint of Figure 11).

As a result of this movement, which is usually brought about in steps, each portion of the belt passes beneath a supply station 34 which deposits a substantially continuous layer or film of melted chocolate on the upwardly-facing surface of the upper pass 33.

Supply machines (spreaders) usable to form the supply station 34 are well-known in the art since they are used extensively in the confectionery industry, for example, for spreading chocolate or other food masses on the flat wafers currently produced.

In particular, these machines 34 carry associated regulating members, for example, a levelling blade 35 which enables the thickness of the film of chocolate (or other adhesive alimentary material) deposited on the belt 30 to be regulated very precisely. Usually one or more heating plates 36 (for example, infra-red heating plates) the function of which is to keep the material constituting the adhesive film deposited or spread on the belt at a temperature such that the material remains in a generally fluid state, are associated with the belt. In the case of chocolate, in particular, the thermostatic effect of the plates 36 is intended to keep the chocolate at a temperature slightly higher than the tempering temperature as long as it is deposited on the belt. This is to ensure (as in the embodiment of Figure 3) that the chocolate preferably sets after the joining line 2 has been used to connect the two wafer half-shells 1 together.

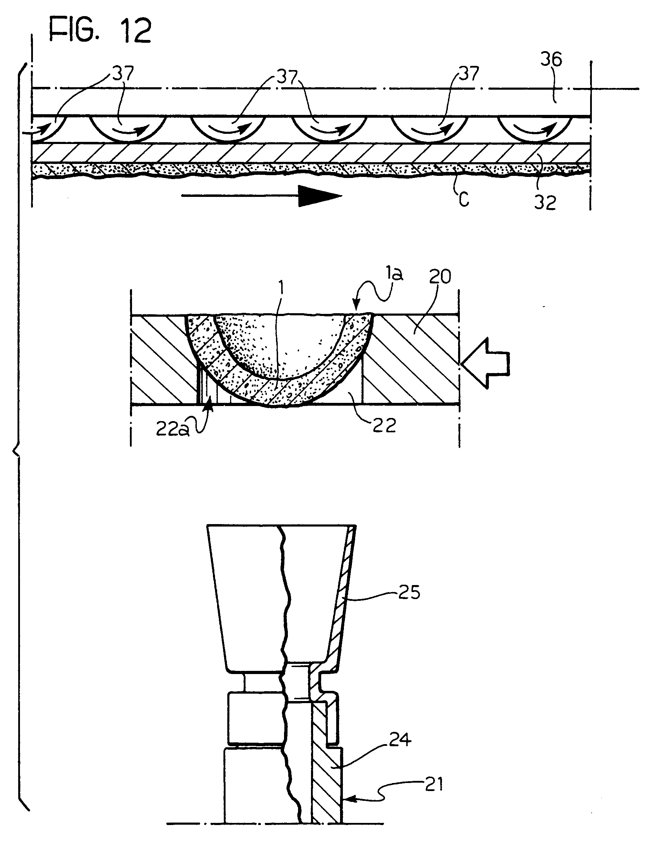

As a result of the stepped movement of the belt 30, the film or layer of chocolate C deposited by the unit 34 on the upper pass 33 advances until it is brought to a position immediately above the die 20, beneath which the tray 14 on which the elements 21 are mounted, is disposed. This is achieved according to the criteria which are best shown in Figure 12 in which the layer or film of melted chocolate, indicated C, is deposited on the surface of the lower pass 32 of the belt which is travelling past an opposing lower unit 38, usually having a plurality of rollers 37 for guiding and supporting the belt 30 in the position in which the joining line 2 is formed.

According to an operating sequence almost identical to that shown in Figures 4 to 8 (which sequence will not be described in detail herein), the raising of the tray 14 with the consequent upward movement of the elements 21 and the picking-up of the half-shells 1 by the collars 25 with the simultaneous activation of the vacuum sources associated therewith causes the opening portions 1a of the half-shells 1 to be wetted (dipped) in the layer of chocolate C spread on the surface of the lower pass 32 of the belt.

In this embodiment the chocolate C also tends to adhere to the surfaces of the opening portions 1a of the half-shells 1 so that, when the half-shells 1 are lowered away from the pass 32 of the belt as a result of the lowering of the tray 14 (brought about in a manner substantially identical to that illustrated in Figures 7 and 8), the joining line 2 of chocolate which can be used to stick two half-shells 1 together face to face is formed on the opening portions 1a.

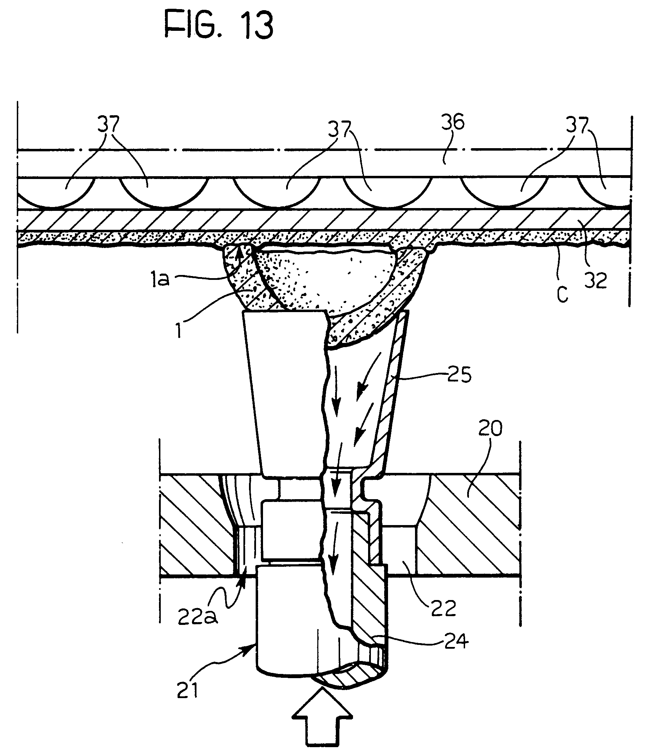

In order to achieve the correct dosage of the chocolate on the opening portions 1a without appreciably wetting the internal and external surfaces of the half-shells 1, in the embodiment of Figures 11 to 13, the surface of the belt 30 onto which the layer or film of chocolate is deposited is preferably not smooth but is at least slightly corrugated, for example, is engraved so as to be generally embossed either as a result of the presence of grooves extending transversely relative to the direction of movement of the belt or with a pattern of squares or rhombuses. This gives rise to cavities on the surface of the belt 30 in which the chocolate or, in any case, the substance which is intended to form the lines 2, can be deposited forming a certain thickness of material. In other words, the surface corrugation of the belt is intended to perform a function essentially equivalent to that performed by the formations 28a in the grooves 28 as shown best in Figure 10.

As far as the final result achieved is concerned, the solutions according to Figure 3 and according to Figure 11 may be considered almost equivalent. The solution of Figure 3 has the advantage, in comparison with Figure 11, of limiting the mass of adhesive alimentary material supplied at any particular time. In practice, the mass corresponds to an amount little greater than that actually picked up by the products (half-shells 1, in the embodiment illustrated) to form the joining lines. The solution 11, however, provides for almost the entire surface of the belt or mat 30 to be covered by a film of chocolate which is picked up only in small quantities by the products during the formation of the joining lines. The solution of Figure 11 has the advantage of being suitable for operation with wafers of various shapes and outlines without the need to change the profile of the spreader belt 30.

In any case, the selection of one or other embodiment is made according to the specific requirements of use. The basic concept of the invention, that is, that of forming an accumulation (for example a piping or a continuous layer) of adhesive alimentary material on a transfer surface (the plate 15 or the belt 30) and of then dipping the regions of the products on which the line (continuous or discontinuous) of adhesive material is to be formed, in the material, preferably as a result of an upward movement, so that they pick up from the accumulation (formed on the transfer surface which is kept facing downwardly) a quantity of material corresponding to the joining line to be formed, remains the same.

Naturally, the principle of the invention remaining the same, the details of construction and forms of embodiment may be varied widely with respect to those described and illustrated, without thereby departing from the teaching of the invention as defined in the claims.

## Claims

1. A method of forming, on predetermined regions (12) of a product (1), lines (2) of adhesive material for joining said product (1) to another product, characterized in that it comprises the chronological steps of:
- providing a member (10; 30) having a surface defining a transfer surface (15; 32) for the adhesive material,
- forming (17; 34) on the transfer surface (15, 30) an accumulation of the adhesive material in a melted state,
- bringing about (12, 14) a relative movement of the products (1) and of the transfer surface (15; 32), dipping the predetermined regions (1a) of the products (1) in the accumulation of the adhesive material, whereby the melted material adheres to said predetermined regions of product (1), and separating the products (1) and the transfer surface (15; 32) while the adhesive material is in a melted state, whereby a portion of the material of said accumulation is carried with the products (1) forming said joining lines (2).

2. A method according to Claim 1, characterized in that it comprises the step of producing the accumulation of adhesive material in the form of a piping of adhesive material of a shape corresponding to the joining lines (2).

3. A method according to Claim 1, characterized in that it comprises the step of producing the accumulation of adhesive material in the form of a substantially continuous layer of adhesive material deposited (34) on the transfer surface (32).

4. A method according to any one of Claims 1 to 3, characterized in that the relative movement is stopped (28a) so as to keep the predetermined regions (1a) of the products (1) at least marginally spaced from the transfer surface (15; 30).

5. A method according to any one of the preceding claims, characterized in that a substantially flat transfer surface (15; 30) is used.

6. A method according to any one of the preceding claims, characterized in that a food product is used as the adhesive material (2).

7. A method according to Claim 6, characterized in that the food product is chocolate.

8. A method according to Claim 6 or Claim 7, characterized in that the adhesive material is kept heated (26b; 36) to a predetermined temperature.

9. A method according to any one of the preceding claims, characterized in that it comprises the step of keeping the transfer surface (15; 30) facing downwards during the formation of the accumulation of adhesive material, and in that the relative movement is brought about with the predetermined regions (1) of the products generally facing upwards.

10. A method according to any one of the preceding claims, characterized in that it comprises the step of gripping the products (1) by means of vacuum gripping elements (21) at least during the relative movement.

11. Method according to any one of the preceding claims, characterized in that the products are food products.

12. A method according to Claim 10, characterized in that the products are pieces of wafer.

13. A method according to Claim 11, characterized in that:
the food products (1) have a generally shell-like configuration,
the predetermined regions (1a) are constituted by the opening portions of the shell-like products (1),
the opening portions being cut in a plane perpendicular to at least one polar axis of the shell-shaped product (1), and
the relative movement is brought about in a direction generally perpendicular to the plane.

14. A device for carrying out a method according to any one of Claims 1 to 13, characterized in that it comprises:
a member (10, 30) having a surface defining a transfer surface (15, 32) for providing an accumulation of adhesive material.
support means (20) for supporting the products (1) with the predetermined regions (1a) facing towards said transfer surface (15; 32),
gripping means (14; 21) which can cooperate with the products (1) in a gripping relationship, in order to move the products (1) towards and away from the transfer surface (15; 32) as a result of said relative movement so as to dip the predetermined regions (1a) in the accumulation of adhesive material (C) and thereafter separate the products (1) and the transfer surface (15; 32).

15. A device according to Claim 14, characterized in that the support means are constituted by a die-like structure (20) which can extend in a position between the transfer surface (15; 32) and the gripping means (14, 21) in use.

16. A device according to Claim 15, characterized in that the die-like structure (20) has respective holes (22) for housing the products (1), the respective holes (22) having dimensions such as to allow the gripping means (21) to penetrate through the holes (22).

17. A device according to any one of Claims 14 to 16, characterized in that the gripping means comprise resiliently yielding collar portions (25) which can cooperate with and partially surround the products (1).

18. A device according to any one of Claims 14 to 17, characterized in that the gripping means (24) are vacuum gripping members.

19. A device according to Claim 16, characterized in that the die structure (20) is constituted essentially by a plate in which an array of the holes (22) for housing the products (1) is formed, and in that the gripping means are associated with a tray-like structure (14) on which the gripping elements (21) are distributed in an array complementary to the array of holes (22).

20. A device according to Claim 19, characterized in that drive means (12) are associated with the tray-like structure (14) for imparting to the gripping means (21) the movement relative to the transfer surface (15; 30).

21. A device according to any one of Claims 14 to 20, characterized in that transfer means (19) are associated with the structure (20) for bringing about a general movement for loading the products (1) onto the device (10) and/or unloading the products (1) therefrom.

22. A device according to any one of Claims 14 to 21, characterized in that the transfer surface is constituted essentially by a supply plate (15) through which a plurality of nozzles (27) extend for supplying the adhesive material, the nozzles being arranged along a line the shape of which corresponds to that of the joining lines to be formed, and in that supply means (26) are associated with the plate (15) for selectively causing the adhesive material to emerge through the nozzles (27).

23. A device according to Claim 22, characterized in that the nozzles (27) are on an end face of the plate (15) in a groove (28) in the end face, so that the accumulation of adhesive material is formed at least partially within the groove (28).

24. A device according to Claim 13, characterized in that stop formations (28a) are associated with the groove (28) for stopping the relative movement of the products (1) and of the transfer surface (15) when the predetermined regions (1a) of the products (1) are dipped in the accumulation of adhesive material.

25. A device according to Claim 19 and Claim 22, characterized in that the supply plate (15) carries an array of sets (23) of nozzles (27), each set (23) of the array being intended to form a respective accumulation of the adhesive material in order to form a respective joining line on a respective product (1).

26. A device according to Claim 22, characterized in that thermostatically-controlled (16) supply means (26a, 26b) are associated with the supply plate (15) in order to keep the adhesive material at a predetermined temperature.

27. A device according to Claim 14, characterized in that the transfer surface is constituted by a flat surface (30) with associated applicator means (32) for applying a substantilly continuous layer of the adhesive material to the flat surface (33), the substantially continuous layer (C) constituting the accumulation.

28. A device according to Claim 27, characterized in that the flat surface (30) has a surface corrugation so as to retain the accumulation of adhesive material (C) on the surface.

29. A device according to Claim 27 or Claim 28, characterized in that the flat surface (30) is constituted by one of the passes (32)of an endless motor-driven belt.

## Patentansprüche

1. Verfahren zum Formen von Linien (2) aus Klebematerial an vorbestimmten Bereichen (1a) eines Erzeugnisses (1) zum Verbinden des Erzeugnisses (1) mit einem anderen Erzeugnis, **dadurch gekennzeichnet, daß** es die chronologischen Schritte umfaßt:
- Vorsehen eines Elementes (10; 30), das eine eine Überführungsfläche (15; 32) definierende Oberfläche für das Klebematerial aufweist,
- Formen (17; 34) einer Anhäufung des sich in einem geschmolzenen Zustand befindlichen Klebematerials auf der Überführungsfläche (15, 30),
- Bewirken (12, 14) einer Relativbewegung des Erzeugnisses (1) und der Überführungsfläche (15; 32), Eintauchen der vorbestimmten Bereiche (1a) der Erzeugnisse (1) in die Klebematerialanhäufung, wodurch das geschmolzene Material an den vorbestimmten Bereichen des Erzeugnisses (1) anhaftet, und Trennen des Erzeugnisses (1) und der Überführungsfläche (15; 32), während das Klebematerial sich in einem geschmolzenen Zustand befindet, wodurch ein Anteil des Materials der Anhäufung mit dem Erzeugnis (1) mitgenommen wird und die Verbindungslinien (2) bildet.

2. Verfahren nach Anspruch 1, **dadurch gekennzeichnet, daß** es den Schritt des Herstellens der Klebematerialanhäufung in Form einer Zuleitung des Klebematerials in einer der Verbindungslinien (2) entsprechenden Gestalt umfaßt.

3. Verfahren nach Anspruch 1, **dadurch gekennzeichnet, daß** es den Schritt des Herstellens der Klebematerialanhäufung in Form einer im wesentlichen kontinuierlichen Schicht aus Klebematerial umfaßt, die auf der Überführungsfläche (32) abgelagert (34) ist.

4. Verfahren nach einem der Ansprüche 1 bis 3, **dadurch gekennzeichnet, daß** die Relativbewegung gestoppt wird (28a), um so die vorbestimmten Bereiche (1a) der Erzeugnisse (1) von der Überführungsfläche (15; 30) zumindest geringfügig beabstandet zu halten.

5. Verfahren nach einem der vorhergehenden Ansprüche, **dadurch gekennzeichnet, daß** eine im wesentlichen flache Überführungsfläche (15; 30) verwendet wird.

6. Verfahren nach einem der vorhergehenden Ansprüche, **dadurch gekennzeichnet, daß** ein Nahrungsmittelerzeugnis als Klebematerial (2) verwendet wird.

7. Verfahren nach Anspruch 6, **dadurch gekennzeichnet, daß** das Nahrungsmittelerzeugnis Schokolade ist.

8. Verfahren nach Anspruch 6 oder Anspruch 7**, dadurch gekennzeichnet, daß** das Klebematerial auf einer vorbestimmten Temperatur erhitzt (26b; 36) gehalten wird.

9. Verfahren nach einem der vorhergehenden Ansprüche, **dadurch gekennzeichnet, daß** es den Schritt des während der Formung der Klebematerialanhäufung abwärts zeigenden Haltens der Überführungsfläche (15; 30) umfaßt, und daß die Relativbewegung mit im wesentlichen aufwärts zeigenden vorbestimmten Bereichen (1) der Erzeugnisse bewirkt wird.

10. Verfahren nach einem der vorhergehenden Ansprüche, **dadurch gekennzeichnet, daß** es zumindest während der Relativbewegung den Schritt des Ergreifens der Erzeugnisse (1) mittels Vakuumgreifelemente (21) umfaßt.

11. Verfahren nach einem der vorhergehenden Ansprüche, **dadurch gekennzeichnet, daß** die Erzeugnisse Nahrungsmittelerzeugnisse sind.

12. Verfahren nach Anspruch 10, **dadurch gekennzeichnet, daß** die Erzeugnisse Waffelteile sind.

13. Verfahren nach Anspruch 11, **dadurch gekennzeichnet, daß:**
die Nahrungsmittelerzeugnisse (1) eine im wesentlichen schalenartige Ausbildung aufweisen,
die vorbestimmten Bereiche (1a) durch die Öffnungsabschnitte der schalenartigen Erzeugnisse (1) gebildet sind,
die Öffnungsabschnitte in einer Ebene senkrecht zur zumindest einer Polarachse der schalenartigen Erzeugnisse (1) abgeschnitten sind, und
die Relativbewegung in einer im wesentlichen senkrecht zu der Ebene liegenden Richtung bewirkt wird.

14. Vorrichtung zur Durchführung des Verfahrens nach einem der Ansprüche 1 bis 13, **dadurch gekennzeichnet, daß** sie umfaßt:
ein Element (10, 30), das eine Überführungsfläche (15, 32) definierende Oberfläche zum Vorsehen einer Klebematerialanhäufung aufweist,
Tragmittel (20) zum Tragen der Erzeugnisse (1) mit den zur Überführungsfläche (15; 32) hinzeigenden vorbestimmten Bereichen (1a),
Greifmittel (14; 21), die mit den Erzeugnissen (1) in einer Eingriffsrelation zusammenwirken können, um die Erzeugnisse (1) als Folge der Relativbewegung zur Überführungsfläche (15; 32) hin und hiervon weg zu bewegen, um so die vorbestimmten Bereiche (1a) in die Klebematerialanhäufung (C) einzutauchen und hiernach die Erzeugnisse (1) und die Überführungsfläche (15; 32) zu trennen.

15. Vorrichtung nach Anspruch 14, **dadurch gekennzeichnet, daß** die Tragmittel durch eine matrizenartige Struktur (20) gebildet sind, die sich beim Gebrauch in eine zwischen der Überführungsfläche (15, 32) und den Greifmitteln (14, 21) liegende Position erstrecken können.

16. Vorrichtung nach Anspruch 15, **dadurch gekennzeichnet, daß** die matrizenartige Struktur (20) jeweils Löcher (22) zur Aufnahme der Erzeugnisse (1) aufweist, wobei die jeweiligen Löcher (22) solche Abmessungen aufweisen, die es zulassen, daß die Greifmittel (21) durch die Löcher (22) hindurchdringen können.

17. Vorrichtung nach einem der Ansprüche 14 bis 16, **dadurch gekennzeichnet, daß** die Greifmittel federnd-elastisch nachgiebige Kragenabschnitte (25) umfassen, die mit den Erzeugnissen (1) zusammenwirken und diese teilweise umgeben.

18. Vorrichtung nach einem der Ansprüche 14 bis 17, **dadurch gekennzeichnet, daß** die Greifmittel (24) Vakuumgreifelemente sind.

19. Vorrichtung nach Anspruch 16, **dadurch gekennzeichnet, daß** die Matrizenstruktur (20) im wesentlichen durch eine Platte gebildet ist, in die eine Anornung der Löcher (22) zur Aufnahme der Erzeugnisse (1) ausgebildet ist, und daß die Greifmittel einer tablettartigen Struktur (14) beigeordnet sind, auf der die Greifelemente (21) in einer Anordnung verteilt sind, die zur Löcheranordung (23) komplementär ist.

20. Vorrichtung nach Anspruch 19, **dadurch gekennzeichnet, daß** der tablettartigen Struktur (14) Antriebsmittel (12) beigeordnet sind, um den Greifmitteln (21) die Bewegung relativ zur Überführungsfläche (15; 30) zu vermitteln.

21. Vorrichtung nach einem der Ansprüche 14 bis 20, **dadurch gekennzeichnet, daß** der Struktur (20) Überführungsmittel (19) beigeordnet sind, um eine allgemeine Bewegung zum Aufbringen der Erzeugnisse (1) auf die Vorrichtung (10) und/oder Abnehmen der Erzeugnisse (1) hiervon zu bewirken.

22. Vorrichtung nach einem der Ansprüche 14 bis 21, **dadurch gekennzeichnet, daß** die Überführungsfläche im wesentlichen durch eine Zuführplatte (15) gebildet ist, durch die sich eine Anzahl Düsen (27) erstrecken, um das Klebematerial zuzuführen, wobei die Düsen entlang einer Linie der Form angeordnet sind, die der zu bildenden Verbindungslinie entspricht, und daß die Zuführmittel (26) der Platte (15) beigeordnet sind, um selektiv zu bewirken, daß das Klebematerial durch die Düsen (27) austritt.

23. Vorrichtung nach Anspruch 22, **dadurch gekennzeichnet, daß** die Düsen (27) auf einer Stirnfläche der Platte (15) in einer Nut (28) in der Stirnfläche vorhanden sind, so daß die Klebematerialanhäufung zumindest teilweise innerhalb der Nut (28) ausgebildet wird.

24. Vorrichtung nach Anspruch 13, **dadurch gekennzeichnet, daß** der Nut (28) Stoppformationen (28a) beigeordnet sind, um die relative Bewegung der Erzeugnisse (1) und der Überführungsfläche (15) zu stoppen, wenn die vorbestimmten Bereiche (1a) der Erzeugnisse (1) in die Klebematerialanhäufung eingetaucht sind.

25. Vorrichtung nach Anspruch 19 und Anspruch 22, **dadurch gekennzeichnet, daß** die Zuführplatte (15) eine Anordnung von Sets (23) aus Düsen (27) trägt, wobei jedes Set (23) der Anordnung dazu bestimmt ist, eine jeweilige Klebematerialanhäufung zu bilden, um jeweils eine Verbindungslinie auf einem jeweiligen Erzeugnis (1) zu formen.

26. Vorrichtung nach Anspruch 22, **dadurch gekennzeichnet, daß** der Zuführplatte (15) thermostatisch-gesteuerte (16) Zuführmittel (26a, 26b) beigeordnet sind, um das Klebematerial auf einer vorbestimmten Temperatur zu halten.

27. Vorrichtung nach Anspruch 14, **dadurch gekennzeichnet, daß** die Überführungsfläche durch eine flache Oberfläche (30) mit beigeordneten Applikatormitteln (32) zur Aufbringung einer im wesentlichen kontinuierlichen Schicht aus Klebematerial auf die flache Oberfläche (33) ausgebildet ist, wobei die im wesentlichen kontinuierliche Schicht (C) die Anhäufung bildet.

28. Vorrichtung nach Anspruch 27, **dadurch gekennzeichnet, daß** die flache Oberfläche (30) eine Oberflächenriffelung aufweist, um so die Klebematerialanhäufung (C) auf der Oberfläche zu halten.

29. Vorrichtung nach Anspruch 27 oder Anspruch 28, **dadurch gekennzeichnet, daß** die flache Oberfläche (30) durch eine der Bahnen (32) eines motorgetriebenen Endlosbandes gebildet ist.

## Revendications

1. Procédé pour former, sur des régions prédéterminées (1a) d'un produit (1), des lignes (2) de matière adhésive pour la jonction dudit produit (1) à un autre produit, caractérisé en ce qu'il comprend les phases chronologiques consistant à :
- disposer d'un moyen (10; 30) comportant une surface définissant une surface de transfert (15; 32) pour la matière adhésive,
- former (17; 34) sur la surface de transfert (15, 30) une accumulation de matière adhésive dans un état fondu,
- produire (12, 14) un mouvement relatif des produits (1) et de la surface de transfert (15; 32), plongeant les régions prédéterminées (1a) des produits (1) dans l'accumulation de matière adhésive, de manière que la matière fondue adhère auxdites régions prédéterminées des produits (1), et
- séparer les produits (1) et la surface de transfert (15; 32) tandis que la matière adhésive est dans un état fondu, de manière qu'une portion de la matière de ladite accumulation soit transportée avec les produits (1), formant lesdites lignes de jonction (2).

2. Procédé selon la revendication 1, caractérisé en ce qu'il comprend la phase consistant à produire l'accumulation de matière adhésive sous la forme d'un cordon de matière adhésive d'une forme correspondant aux lignes de jonction (2).

3. Procédé selon la revendication 1, caractérisé en ce qu'il comprend la phase consistant à produire l'accumulation de matière adhésive sous la forme d'une couche sensiblement continue de matière adhésive déposée (34) sur la surface de transfert (32).

4. Procédé selon l'une quelconque des revendications 1 à 3, caractérisé en ce que le mouvement relatif est arrêté (28a) de manière à garder les régions prédéterminées (1a) des produits (1) au moins espacées marginalement de la surface de transfert (15 ; 30).

5. Procédé selon l'une quelconque des revendications précédentes, caractérisé en ce qu'une surface de transfert (15; 30) sensiblement plate est utilisée.

6. Procédé selon l'une quelconque des revendications précédentes, caractérisé en ce qu'un produit alimentaire est utilisé comme matière adhésive (2).

7. Procédé selon la revendication 6, caractérisé en ce que le produit alimentaire est du chocolat.

8. Procédé selon la revendication 6 ou la revendication 7, caractérisé en ce que la matière adhésive est gardée chauffée (26b, 36) jusqu'à une température prédéterminée.

9. Procédé selon l'une quelconque des revendications précédentes, caractérisé en ce qu'il comprend la phase consistant à garder la surface de transfert (15; 30) donnant généralement vers le bas durant la formation de l'accumulation de matière adhésive, et en ce que le mouvement relatif est produit avec les régions prédéterminées (1a) des produits donnant généralement vers le haut.

10. Procédé selon l'une quelconque des revendications précédentes, caractérisé en ce qu'il comprend la phase consistant à saisir les produits (1) au moyen d'éléments de préhension par aspiration (21) au moins durant le mouvement relatif.

11. Procédé selon l'une quelconque des revendications précédentes, caractérisé en ce que les produits sont des produits alimentaires.

12. Procédé selon la revendication 10, caractérisé en ce que les produits sont des morceaux de gaufrette.

13. Procédé selon la revendication 11, caractérisé en ce que :
les produits alimentaires (1) ont une configuration généralement en forme de coque,
les régions prédéterminées (1a) sont constituées par les portions d'ouverture des produits (1) en forme de coque,
les portions d'ouverture étant coupées dans un plan perpendiculaire à au moins un axe polaire du produit (1) en forme de coque, et
le mouvement relatif est produit dans une direction généralement perpendiculaire au plan.

14. Dispositif pour mettre un oeuvre un procédé selon l'une quelconque des revendications 1 à 13, caractérisé en ce qu'il comprend
un moyen (10; 30) comportant une surface définissant une surface de transfert (15; 32) pour former une accumulation de matière adhésive,
un moyen de support (20) pour supporter les produits (1) avec les régions prédéterminées (1a) donnant vers ladite surface de transfert (15; 32),
un moyen de préhension (14; 21) qui peut coopérer avec les produits (1) dans une relation de préhension, afin de rapprocher et d'éloigner les produits (1) de la surface de transfert (15; 32) en conséquence dudit mouvement relatif afin de plonger les régions prédéterminées (1a) dans l'accumulation de matière adhésive (C) puis séparer les produits (1) et la surface de transfert (15; 32).

15. Dispositif selon la revendication 14, caractérisé en ce que le moyen de support est constitué par une structure du type moule (20) qui peut s'étendre dans une position entre la surface de transfert (15; 32) et le moyen de préhension (14; 21) à l'utilisation.

16. Dispositif selon la revendication 15, caractérisé en ce que la structure du type moule (20) comporte des trous respectifs (22) pour loger les produits (1), les trous respectifs (22) ayant des dimensions permettant au moyen de préhension (21) de pénétrer dans les trous (22).

17. Dispositif selon l'une quelconque des revendications 14 à 16, caractérisé en ce que le moyen de préhension comprend des portions de collerettes (25) s'affaissant élastiquement qui peuvent coopérer avec les produits (1) et partiellement les entourer.

18. Dispositif selon l'une quelconque des revendications 14 à 17, caractérisé en ce que le moyen de préhension (24) consiste en organes de préhension par aspiration.

19. Dispositif selon la revendication 16, caractérisé en ce que la structure de moule (20) est constituée principalement par une plaque dans laquelle un ensemble de trous (22) pour loger les produits (1) est formé, et en ce que le moyen de préhension est associé a une structure du type plateau (14) sur laquelle les éléments de préhension (21) sont répartis en un ensemble complémentaire de l'ensemble de trous (22).

20. Dispositif selon la revendication 19, caractérisé en ce qu'un moyen d'entraînement (12) est associé a la structure du type plateau (14) pour donner au moyen de préhension (21) le mouvement relativement à la surface de transfert (15; 30).

21. Dispositif selon l'une quelconque des revendications 14 à 20, caractérisé en ce qu'un moyen de transfert (19) est associé a la structure (20) pour produire un mouvement général afin de charger les produits (1) sur le dispositif (10) et/ou décharger les produits (1) de celui-ci.

22. Dispositif selon l'une quelconque des revendications 14 a 21, caractérisé en ce que la surface de transfert est constituée principalement par une plaque d'alimentation (15) dans laquelle une pluralité de buses (27) s'étendent pour distribuer la matière adhésive, les buses étant agencées le long d'une ligne dont la forme correspond à celle des lignes de jonction à former, et en ce qu'un moyen d'alimentation (26) est associé à la plaque (15) pour amener sélectivement la matière adhésive à émerger via les buses (27).

23. Dispositif selon la revendication 22, caractérisé en ce que les buses (27) sont situées sur une face d'extrémité de la plaque (15) dans une gorge (28) dans la face d'extrémité, de manière que l'accumulation de matière adhésive soit formée au moins partiellement au sein de la gorge (28).

24. Dispositif selon la revendication 13, caractérisé en ce que des formations d'arrêt (28a) sont associées à la gorge (28) pour arrêter le mouvement relatif des produits (1) et de la surface de transfert (15) lorsque les régions prédéterminées (1a) des produits (1) sont plongées dans l'accumulation de matière adhésive.

25. Dispositif selon la revendication 19 et la revendication 22, caractérisé en ce que la plaque d'alimentation (15) supporte un ensemble de jeux (23) de buses (27), chaque jeu (23) de l'ensemble étant destiné à former une accumulation respective de matière adhésive afin de former une ligne de jonction respective sur un produit (1) respectif.

26. Dispositif selon la revendication 22, caractérisé en ce qu'un moyen d'alimentation (26a, 26b) commandé par thermostat (16) est associé à la plaque d'alimentation (15) afin de garder la matière adhésive à une température prédéterminée.

27. Dispositif selon la revendication 14, caractérisé en ce que la surface de transfert est constituée par une surface plate (30) avec un moyen d'application associé (32) pour appliquer une couche sensiblement continue de matière adhésive sur la surface plate (33), la couche sensiblement continue (C) constituant l'accumulation.

28. Dispositif selon la revendication 27, caractérisé en ce que la surface plate (30) présente des rugosités de surface de manière à retenir l'accumulation de matière adhésive (C) sur la surface.

29. Dispositif selon la revendication 27 ou la revendication 28, caractérisé en ce que la surface plate (30) est constituée par l'un des brins (32) d'une bande sans fin actionnée par moteur.
